# EUROPÄISCHE PATENTSCHRIFT

(11) **EP 0 898 095 B1**
(45) Veröffentlichungstag und Bekanntmachung des Hinweises auf die Patenterteilung: **10.05.2000**
(21) Anmeldenummer: 98110861.6
(22) Anmeldetag: 13.06.1998
(51) Int. Cl.: F16H 3/38, F16H 63/30

(54) **Schaltvorrichtung fuer ein Wechselgetriebe von Kraftfahrzeugen**
Shifting apparatus for a change-speed gearbox
Dispositif de commande d'une boîte de vitesses pour véhicule automobile

(30) Priorität: 21.06.1997 DE 19726380
(43) Veröffentlichungstag der Anmeldung: 24.02.1999
(73) Patentinhaber: Ford Global Technologies, Inc., A subsidiary of Ford Motor Company, Dearborn, Michigan 48126 (US)
(72) Erfinder: Adams, Gerd, 42799 Leichlingen (DE); Chazotte, Jean-Pierre, 50678 Koeln (DE)
(74) Vertreter: Messulam, Alec Moses

(56) Entgegenhaltungen:
- EP-A- 0 668 457
- FR-A- 2 604 233
- GB-A- 2 127 114
- GB-A- 2 152 163
- US-A- 3 793 897
- US-A- 4 294 338

## Beschreibung

Die Erfindung bezieht sich auf eine Schaltvorrichtung für ein Wechselgetriebe von Kraftfahrzeugen, der im Oberbegriff des Patentanspruchs 1 erläuterten Art.

Aus der US-PS 4 294 338 ist eine Schaltvorrichtung für ein Wechselgetriebe von Kraftfahrzeugen bekannt, die in etwa dem Oberbegriff des Patentanspruchs 1 entspricht.

Bei der bekannten Schaltvorrichtung wird eine auf einer Getriebewelle angeordnete doppelseitige Synchronisiereinheit einerseits zum Schalten eines Vorwärtsganges und andererseits während des Schaltens des Rückwärtsganges zum Abbremsen der Getriebewelle herangezogen.

Das zum Einrücken des Rückwärtsganges in den Zug der Rückwärtsgang-Getrieberäder einzuschiebende Rückwärtsgang-Schieberad wird hierbei über eine aufwendige Hebelanordnung unmittelbar von der Hauptschaltstange des Wechselgetriebes aus betätigt.

Die bekannte Schaltvorrichtung weist damit den Nachteil auf, daß für das Einrücken des Rückwärtsgang-Schieberades eine verhältnismäßig aufwendige und durch die Toleranzsummierungen störanfällige Hebelanordnung erforderlich ist.

Die Aufgabe der Erfindung ist es, eine Schaltvorrichtung für ein Wechselgetriebe von Kraftfahrzeugen, der im Oberbegriff des Patentanspruchs 1 erläuterten Art derart zu verbessern, daß für das Einrücken des Rückwärtsgang-Schieberades eine wesentlich einfachere, mit geringeren Toleranzsummierungen behaftete Hebelanordnung vorgesehen wird.

Gemäß der Erfindung wird diese Aufgabe gelöst, indem bei einer Schaltvorrichtung für ein Wechselgetriebe von Kraftfahrzeugen, der im Oberbegriff des Patentanspruchs 1 erläuterten Art, die im Kennzeichenteil des Patentanspruchs 1 aufgezeigten Merkmale angewendet werden.

Dadurch, daß das Rückwärtsgang-Schieberad auf einer Rückwärtsgang-Lagerachse verschiebbar angeordnet ist, die sich bis in die Nähe der Schiebemuffe der Synchronisiereinheit erstreckt und dort um einen Bolzen schwenkbar einen zweiarmigen Betätigungshebel aufnimmt, dessen ein Ende über einen Bolzen in die Ringnut der Schiebemuffe eingreift und dessen anderes Ende über eine Bolzen/Schlitz-Verbindung mit einem Arm einer auf der Rückwärtsgang-Lagerachse verschiebbar gelagerten Führungshülse in Verbindung steht, deren anderer Arm in eine Ringnut des Rückwärtsgang-Schieberades eingreift, wird die Betätigungsbewegung für das Rückwärtsgang-Schieberad unmittelbar von der Schaltbewegung der Schiebemuffe für den Vorwärtsgang und für die Abbremseinrichtung abgeleitet und unmittelbar auf die Schiebemuffe für das Rückwärtsgang-Schieberad übertragen.

Die Erfindung wird anhand eines in den beigefügten Zeichnungen gezeigten Ausführungsbeispiels näher erläutert, es zeigt:
- Fig.1: einen vertikalen Teilschnitt durch ein Wechselgetriebe eines Kraftfahrzeuges im Bereich der Eingangswelle und der Rädersätze für den 5. Gang und den Rückwärtsgang;
- Fig.2: einen vertikalen Schnitt entlang der Linie II-II in Fig. 1 und

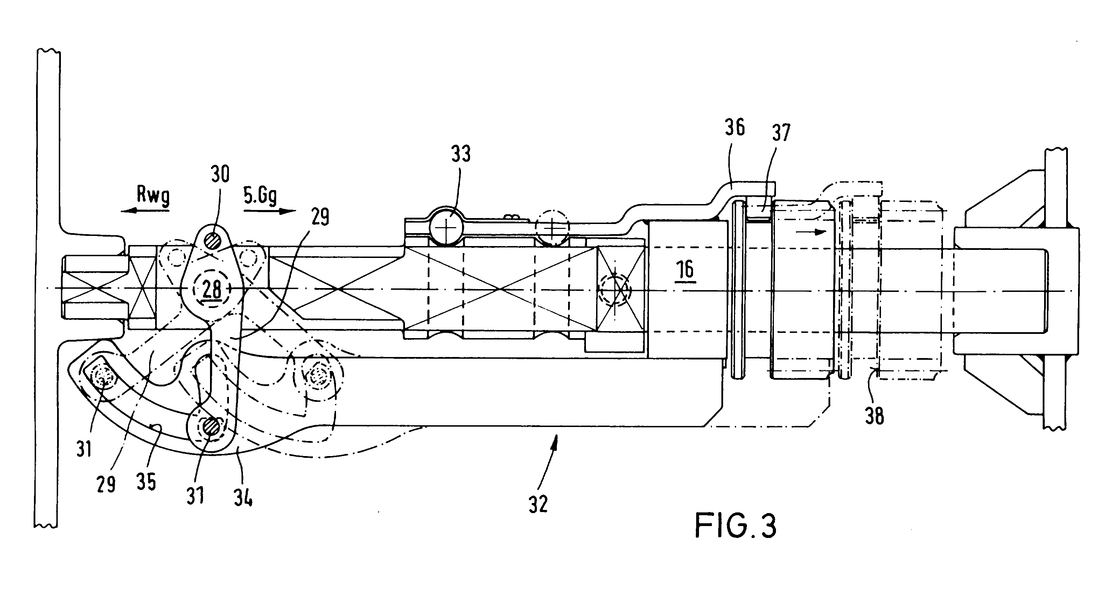

- Fig.3: eine Draufsicht auf die Rückwärtsgang-Lagerachse mit der erfindungsgemäßen Hebel- und Schiebehülsenanordnung.

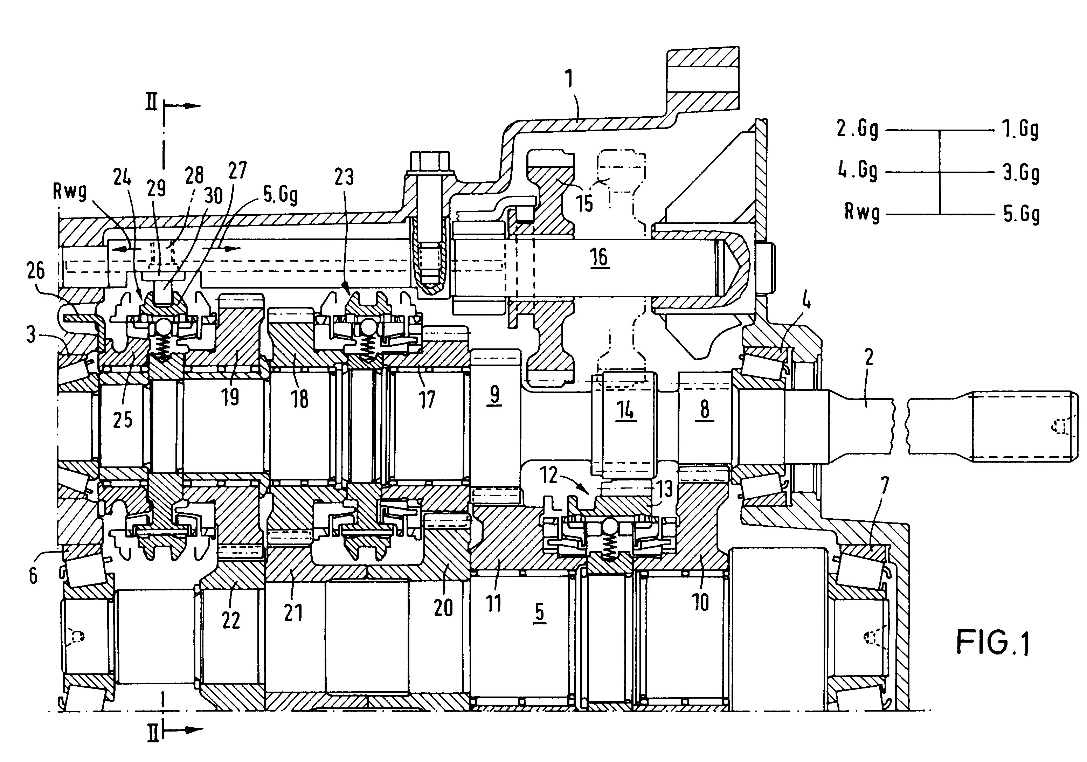

In Fig. 1 ist in einem Getriebegehäuse 1 eine Eingangswelle 2 in entsprechenden Lagern 3 und 4 und eine Vorgelege- oder Ausgangswelle 5 in entsprechenden Lagern 6 und 7 drehbar angeordnet. Auf der Eingangswelle 2 sind feste Zahnräder 8 und 9 für den 1. und 2. Gang angeordnete, die mit entsprechenden losen Zahnrädern 10 und 11 auf der Ausgangswelle 5 in ständigem Eingriff stehen. Zwischen den losen Zahnrädern 10 und 11 ist eine Synchronisiereinheit 12 zum Schalten des 1. und 2. Ganges angeordnet.

Die Schiebemuffe 13 der Synchronisiereinheit 12 ist hierbei an ihrem Außenumfang als Zahnrad ausgebildet, das mit einem festen Zahnrad 14 auf der Eingangswelle 2 und einem Rückwärtsgang-Schieberad 15, das auf einer Rückwärtsgang-Lagerachse 16 angeordnet ist den Räderzug für den Rückwärtsgang bildet.

Auf der Eingangswelle 2 sind weiterhin lose Zahnräder 17, 18 und 19 zum Schalten des 3., 4. und 5. Ganges angeordnet, die in ständigem Eingriff mit entsprechenden festen Zahnräden 20, 21 und 22 auf der Ausgangswelle 5 stehen.

Zwischen den losen Zahnrädern 17 und 18 ist auf der Eingangswelle 2 eine 2. Synchronisiereinheit 23 angeordnet mit der in üblicher Weise der 3. und 4. Gang geschaltet werden kann.

Benachbart dem losen Zahnrad 19 für den 5. Gang ist eine 3. Synchronisiereinheit 24 angeordnet, die einerseits zum Schalten des 5. Ganges und andererseits zum Bremsen der Eingangswelle dient.

Die Einrichtung zum Abbremsen der Eingangswelle besteht hierbei aus einem auf der Eingangswelle 2 lose laufenden Konusring 25, der über einen radialen-axialen Vorsprung 26 gegen Drehung im Getriebegehäuse 1 festgelegt ist. Die Funktion dieser mit der Schiebemuffe 27 für den 5. Gang zusammenwirkenden Abbremseinrichtung ist aus dem Stand der Technik gemäß der US-PS 4 294 338 bekannt und nicht unmittelbarer Gegenstand der vorliegenden Erfindung.

Gegenstand der Erfindung ist vielmehr eine einfache Betätigung des Rückwärtsgang-Schieberades 15 das auf seiner Rückwärtsgang-Lagerachse 16 verschiebbar und drehbar angeordnet ist.

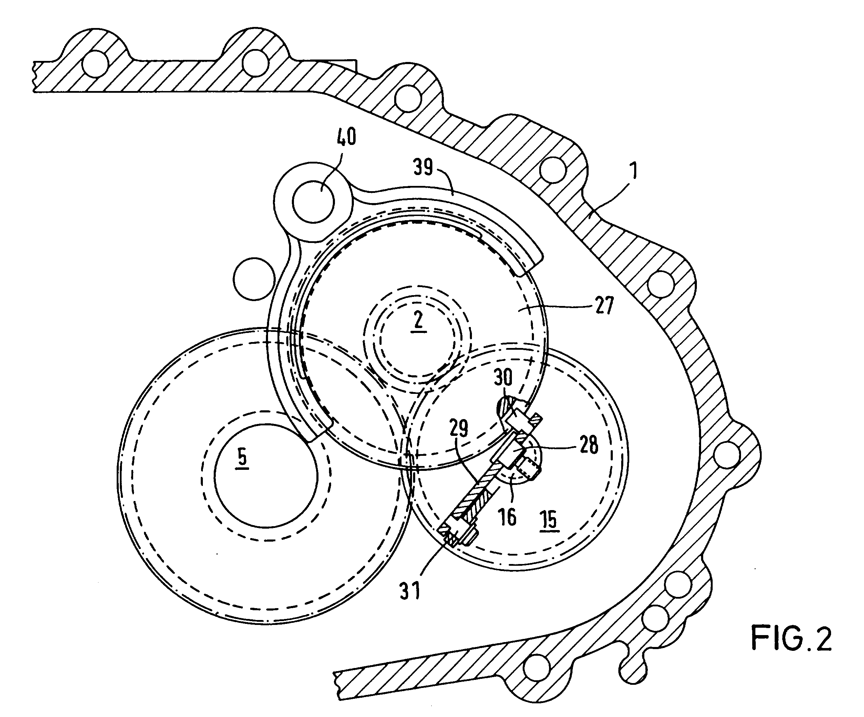

Die Rückwärtsgang-Lagerachse 16 ist hierbei bis in die Nähe der Schiebemuffe 27 verlängert und ist dort mit einem Schwenkbolzen 28 für einen zweiarmigen Betätigungshebel 29 versehen. Der zweiarmige Betätigungshebel 29 ist an seinem einen Ende, siehe Fig. 2, mit einem Bolzen 30 versehen, mit dem er in die Ringnut der Schiebemuffe 27 eingreift. Der zweiarmige Betätigungshebel 29 weist an seinem anderen Ende einen Bolzen 31 auf, mit dem er in Form einer Bolzen/Schlitz-Verbindung mit einem Arm einer Schiebehülse 32 verbunden ist.

Die Schiebehülse 32 ist auf der Rückwärtsgang-Lagerachse 16 axial verschiebbar gelagert und kann über eine Kugelraste 33 aus ihrer in vollen Linien gezeigten Ruhelage in Ihre Strichpunkt-Linien gezeichnete Einrücklage des Rückwärtsganges verschoben werden. Die Schiebehülse 32 weist einen Arm 34 auf, in dem ein winkelförmiger Schlitz 35 angeordnet ist, der mit dem Bolzen 31 nach Art einer Leergangverbindung derart zusammenwirkt, daß bei einer Bewegung der Schiebemuffe 27 in Richtung Einrücken des 5. Ganges keine Verschiebung der Schiebehülse 32 erfolgt wohingegen bei Verschieben der Schiebemuffe 27 in die entgegengesetzte Richtung ein Verschieben der Schiebehülse 32 zum Einrücken des Rückwärtsgang-Schieberades 15 erfolgt.

Die Schiebehülse 32 weist an ihrem anderen Ende einen Arm 36 auf, der mit einem radialen Bolzen 37 versehen ist, der sich nach innen hin in eine Ringnut 38 am Rückwärtsgang-Schieberad 15 erstreckt, um dieses zum Einrücken des Rückwärtsganges axial zu verschieben. Aus der beschriebenen Hebelanordnung zum Einrücken des Rückwärtsganges wird ersichtlich, daß die Einrückbewegung für das Rückwärtsgang-Schieberad 15 unmittelbar von der Schiebemuffe 27 abgeleitet wird, die ihrerseits wieder in an sich bekannter Weise über eine Schaltgabel 39 unmittelbar von der Hauptschaltwelle 40 des Wechselgetriebes betätigt wird.

Damit können große radiale Hebellängen, die zur Überbrückung des Achsabstandes bis zur Rückwärtsgang-Lagerachse erforderlich wären vermieden werden. Durch die konzentrisch zur Rückwärtsgang-Lagerachse angeordnete Schiebehülse 32 mit der nur eine geringe radiale Auskragung aufweisende Hebelanordnung in Form des zweiarmigen Betätigungshebels 29 können Toleranzsummierungen in einem geringen Umfang gehalten werden, so daß zum Schalten des Rückwärtsganges eine präzise Hebeeinrichtung zur Verfügung gestellt wird.

## Patentansprüche

1. Schaltvorrichtung für ein Wechselgetriebe von Kraftfahrzeugen, mit einer auf einer Getriebewelle (2) angeordneten Synchronisiereinheit (24), deren Schiebemuffe (27) zum Schalten eines Vorwärtsganges (5. Gang) in eine Richtung und während des Schaltens eines Rückwärtsganges (RWG) zum Abbremsen der Getriebewelle (2) über einen Konusring (25) in die andere Richtung verschiebbar ist und wobei über eine besondere Hebelanordnung ein Rückwärtsgang-Schieberad (15) in Eingriff mit entsprechenden, den Rückwärtsgang bildenden Zahnrädern (13 und 14) verschiebbar ist,
**dadurch gekennzeichnet**, daß
- das Rückwärtsgang-Schieberad (15) auf einer Rückwärtsgang-Lagerachse (16) verschiebbar angeordnet ist, die sich bis in die Nähe der Schiebemuffe (27) der Synchronisiereinrichtung (24) erstreckt,
- dort an der Rückwärtsgang-Lagerachse (16) ein Bolzen (28) angeordnet ist, um den ein zweiarmiger Betätigungshebel (29) schwenkbar angeordnet ist, dessen ein Ende über einen ersten Bolzen (30) in die Ringnut der Schiebemuffe (27) eingreift und dessen anderes Ende über einen zweiten Bolzen (31) in Verbindung mit einer aus Rückwärtsgang-Lagerachse (16) verschiebbar angeordneten Schiebehülse (32) steht, wobei der zweite Bolzen (31) über einen L-förmigen Schlitz (35) im einen Arm (34) der Schiebehülse (32) eine teilweise Leergangverbindung bildend verbunden ist und die Schiebehülse (32) über ihren anderen Arm (36) mit einem Bolzen (37) in die Ringnut (38) des Rückwärtsgang-Schieberades (15) eingreift.

2. Schaltvorrichtung für ein Wechselgetriebe von Kraftfahrzeugen nach Anspruch 1,
**dadurch gekennzeichnet**, daß
- die Schiebehülse (32) über eine Kugelraste (33) unmittelbar an der Rückwärtsgang-Lagerachse (16) in einer Ruhelage und in einer Einrücklage rastbar ist.

3. Schaltvorrichtung für ein Wechselgetriebe von Kraftfahrzeugen nach den Ansprüchen 1 oder 2,
**dadurch gekennzeichnet**, daß
- der an der Rückwärtsgang-Lagerachse (16) angeordnete Bolzen (28) mit dem zweiarmigen Betätigungshebel (29) in einem abgeflachten Bereich der Rückwärtsgang-Lagerachse (16) angeordnet und hierdurch in seiner Betätigungsebene definiert geführt ist.

4. Schaltvorrichtung für ein Wechselgetriebe von Kraftfahrzeugen nach einem der Ansprüche 1 - 3,
**dadurch gekennzeichnet**, daß
- der in die Ringnut der Schiebemuffe (27) eingreifende erste Bolzen (30) des zweiarmigen Betätigungshebels (29) als eine drehbar gelagerte Rolle ausgeführt ist, um Verschleiß und Reibung zu verringern.

## Claims

1. Shifting apparatus for a change-speed gearbox of motor vehicles with a synchronising unit (24) positioned on a selector shaft (2), the shift muff (27) of this unit being displaceable in one direction for shifting a forward gear (5^{th} gear) and displaceable in the other direction during the shifting of a reverse gear (RWG) to brake the selector shaft (2) via a conical ring (25) and, by means of a particular lever arrangement, a reverse gear sliding gearwheel (15) being displaceable in engagement with corresponding gearwheels (13 and 14) which form the reverse gear,
characterised in that
- the reverse gear sliding gearwheel (15) is positioned in a displaceable manner on a reverse gear arbor (16) which extends into the vicinity of the shift muff (27) of the synchronising unit (24),
- a pin (28) is positioned there on the reverse gear arbor (16) around which a two-armed actuating lever (29) is positioned in a hinged manner, one of its ends engaging, via a first pin (30), with the ring groove of the shift muff (27) and its other end being in connection, via a second pin (31), with a shift sleeve (32) which can be displaced from the reverse gear arbor (16),
whereby
the second pin (31) is connected via an L-shaped slot (35) in one arm (34) of the shift sleeve (32), forming a partial neutral connection, and the shift sleeve (32) engages via a pin (37) on other arm (36) with the ring groove (38) of the reverse gear sliding gearwheel (15).

2. Shifting apparatus for a change-speed gearbox for motor vehicles according to claim 1,
characterised in that
- the shift sleeve (32) can be locked into an idle position and into an engaged position by means of a ball catch (33) directly on the reverse gear arbor (16).

3. Shifting apparatus for a change-speed gearbox of motor vehicles according to claims 1 or 2,
characterised in that
- the pin (28) positioned on the reverse gear arbor (16) is positioned with the two-armed actuating lever (29) in a levelled area of the reverse gear arbor (16) and is guided in a defined manner by this in its actuating plane.

4. Shifting apparatus for a change-speed gearbox of motor vehicles according to one of claims 1 - 3,
characterised in that
- the first pin (30) of the two-armed actuating lever (29) which engages with the ring groove of the shift muff (27) is configured as a rotatably supported cylinder in order to reduce wear and friction.

## Revendications

1. Dispositif de changement de vitesses pour une boîte de vitesses de véhicules automobiles, avec un synchroniseur (24) qui est disposé sur un arbre de transmission (2) et dont le manchon coulissant (27) peut être coulissé dans une direction pour passer un rapport avant (5^{ème}) et, au moyen d'une bague conique (25), dans l'autre direction pour freiner l'arbre de transmission (2) pendant le passage d'un rapport arrière (marche arrière), un pignon baladeur (15) de marche arrière pouvant, au moyen d'un système particulier de leviers, être déplacé en prise avec des pignons correspondants (13 et 14) constituant le rapport arrière,
**caractérisé** en ce que
- le pignon baladeur (15) de marche arrière est disposé à coulissement sur un axe de montage (16) de marche arrière, qui s'étend jusqu'à proximité du manchon coulissant (27) du synchroniseur (24),
- un pivot (28) est disposé en cet endroit sur l'axe de montage (16) de marche arrière, pivot autour duquel est disposé à pivotement un levier d'actionnement (29) à deux bras, dont une extrémité s'engage par l'intermédiaire d'un premier tenon (30) dans la rainure annulaire du manchon coulissant (27), et dont l'autre extrémité est reliée, par l'intermédiaire d'un deuxième tenon (31), à une douille coulissante (32) disposée à coulissement sur l'axe de montage (16) de marche arrière, le deuxième tenon (31) étant relié au moyen d'une fente (35) en forme de L dans un premier bras (34) de la douille coulissante (32), en formant une liaison à course partiellement à vide, et la douille coulissante (32) s'engageant au moyen de son autre bras (36), par un tenon (37), dans la rainure annulaire (38) du pignon baladeur (15) de marche arrière.

2. Dispositif de changement de vitesses pour une boîte de vitesses de véhicules automobiles selon la revendication 1, **caractérisé** en ce que la douille coulissante (32) peut, au moyen d'un cran d'arrêt sphérique (33), être verrouillée directement sur l'axe de montage (16) de marche arrière dans une position de repos et dans une position d'engagement.

3. Dispositif de changement de vitesses pour une boîte de vitesses de véhicules automobiles selon la revendication 1 ou 2, **caractérisé** en ce que le pivot (28), disposé sur l'axe de montage (16) de marche arrière et muni du levier d'actionnement (29) à deux bras, est disposé dans une région aplatie de l'axe de montage (16) de marche arrière et est ainsi guidé de façon définie dans son plan d'actionnement.

4. Dispositif de changement de vitesses pour une boîte de vitesses de véhicules automobiles selon une des revendications 1 à 3, **caractérisé** en ce que le premier tenon (30) du levier d'actionnement (29) à deux bras, qui s'engage dans la rainure annulaire du manchon coulissant (27), est réalisé sous forme de galet monté à rotation, afin de réduire le frottement et l'usure.
